# EUROPEAN PATENT SPECIFICATION

(11) **EP 0 974 020 B1**
(45) Date of publication and mention of the grant of the patent: **26.11.2003**
(21) Application number: 98919223.2
(22) Date of filing: 06.04.1998
(51) Int. Cl.: F16K 1/228, F16K 27/02, F16K 31/53

(54) **THROTTLE VALVE**
DROSSELVENTIL
ROBINET D'ETRANGLEMENT

(30) Priority: 11.04.1997 IT SV970018
(43) Date of publication of application: 26.01.2000
(73) Proprietor: Tecnoplastic SPA, 16012 Busalla (IT)
(72) Inventor: TUBARO, Bruno, I-16010 Savignone (IT)
(74) Representative: Weiss, Wolfgang
(86) International application number: EP9801995
(87) International publication number: WO98046918

(56) References cited:
- EP-A- 0 166 286
- EP-A- 0 379 615
- EP-A- 0 390 458
- WO-A-96/22482
- DE-A- 2 231 277
- DE-A- 4 217 448
- DE-U- 8 513 613
- DE-U- 9 421 290
- FR-A- 1 552 564
- FR-A- 2 357 797
- FR-A- 2 423 696
- GB-A- 2 069 103
- GB-A- 2 090 380
- US-A- 4 138 090
- US-A- 4 289 296
- US-A- 4 304 392

## Description

The invention relates to a throttle valve according to the features defined in the preamble of claim 1.

Such a valve is known e.g. from document DE-A-2 231 277.

In prior art throttle valves, in order to ensure a sufficient sealing effect between the peripheral end edge of the plug and the annular gasket, the gasket and the plug have to be compressed against each other with a relatively strong force, being sufficient to oppose the action of the pressure of the intercepted fluid. In these valves, the sealing contact surfaces between the throttle plug and the gasket are oriented substantially parallel to the flow direction. Pressure is exerted by the fluid against the lateral faces of the plug and of the gasket, i.e. tangentially or perpendicularly to the radial compressive force between the plug and the gasket, which ensures the sealing action. This condition is very unfavorable. The fluid performs a wedging action between the two surfaces and the pressure of the intercepted fluid is not used to contribute to the sealing contact between the plug and the gasket. Therefore, prior art throttle valves of this type are manufactured in such a way that, when closing the valve, the plug presses with a predetermined force the gasket, which has a certain elasticity and compressibility so that the two parts are preloaded against each other to such an extent as to oppose the strong pushing action of the intercepted fluid flow.

However, this condition requires a considerable force to move the throttle plug from one to the other of the closing and opening positions, which is generally added to the force exerted by the pressure of the fluid on the throttle plug, when the latter is moved to the closing position.
In these two conditions, prior art valves require a very strong construction on the plug controls, which have to ensure a sufficient resistance to the necessary moving forces. Furthermore, in the hand controlled version, the operation is driven by operating levers, which have to be very long, in order to enable people having a medium physical strength to overcome the resistance to the plug movement.

This considerable resistance to the throttle plug movement involves even more serious drawbacks, when the valve is required to be controlled by a motor-driven actuator. In this case, the motor-driven actuator must be properly dimensioned since it has to provide the power required to move the plug. In these types of valves, because of the aforementioned resistance to movement, the actuators become by far the most burdensome element. Moreover, the considerable stress acting thereupon increases wear, limiting their medium life, and requiring more frequent maintenance interventions, and even early replacements of the actuators. Further, the choice among actuator types is restricted to those motor types allowing for the required power supply.

In DE 22 31 277 A1 there is disclosed a butterfly valve for cryogenic liquids. An annular ring is arranged between a housing portion of the valve and a metal ring. The ring is made of a material flexible at all temperatures during mounting and operating the valve. The annular ring consists of a sealing portion cooperating with the edge of the butterfly disc and a seating portion having a groove that interacts with a protrusion on the housing portion. The ring is designed in such a way that sealing and seating is effective at all temperatures despite shrinkage.

In US 4,289,296 A1 there is disclosed an annular seal for a butterfly valve. The annular seal has a radially inner part for sealing against the throttle plug and a radially outer part which is clamped between a first main housing part and a second housing part acting as a retainer ring. The two housing parts are manufactured individually and joint together at a plane different from the median plane of the sealing ring.

Hence, the invention is based on the problem of improving a valve of the type described herein before, so that, thanks to relatively simple and cheap expedients, the plug offers a lower resistance to be moved into its two opening and closing positions, while ensuring a better sealing effect and lower costs for the servo-controlled actuators.

The invention solves the above problems, by providing a valve of the type described herein before, with the features according to the characterizing portion of claim 1. Preferred embodiments of the invention are defined in the dependent claims.

Advantageously, the annular gasket has a radially outer annular part, and a radially inner part, whereas the valve body has a seat for holding said gasket including a seat for clamping said radially outer part, and a seat for housing the radially inner part of the sealing gasket, which is slightly bigger than said radially inner part of the gasket, and is conformed in such a way as to have ducts, apertures, and/or passages for the fluid on the side of the inner part of the gasket, which is provided with the compression surfaces having at least one directional component parallel to the flow, in order to generate a compression perpendicular to the intercepted fluid.

A preferred embodiment provides that the compression surfaces of the gasket, pressing against the plug, consist of the lateral walls of two substantially median coincident annular grooves, formed in the two faces of the annular gasket, said grooves forming an annular neck for connecting the inner part and the outer part of the gasket. The seats for clamping the outer part and those for housing the inner part of the gasket are jointed by an annular compressing narrowing, having, on the side facing the compression walls of the inner part of the gasket, lateral walls which extend at a certain distance from said compression walls, thereby forming, where the housing seat is wider than the thickness of the inner part of the gasket, substantially annular chambers, which may be accessed by the intercepted fluid, on the corresponding side of the throttle plug.

The seat for housing the inner part of the gasket and said inner part of the gasket have cooperating annular sealing contact surfaces, which are oriented transverse to the axis of the gasket and to the flow direction and particularly, are exposed to the hydrostatic pressure of the fluid and have at least one component transverse to the flow direction of the fluid, whereby the hydrostatic pressure of the fluid also acts in the direction of axial sealing compression of the lateral faces of the inner part of the gasket against the corresponding opposite lateral wall of the seat for housing it.

When the annular sealing gasket is disposed in a housing seat which terminates at a certain distance from the peripheral end edge of the plug contacted by the inner part of the gasket, the combined effect of the hydrostatic pressure of the intercepted fluid, acting both radially and axially with respect to the gasket causes the inner part of the gasket to be substantially wedged between the peripheral end edge of the plug and the lateral wall of the housing seat, opposite to the intercepted fluid.

Thanks to the above mentioned characteristics, the plug of the throttle valve according to the invention has a lower resistance to movement, since the compressive force required to ensure the sealing effect between the gasket and the plug is at least partially generated by the hydrostatic pressure of the fluid intercepted when the plug is in the closing position. The gasket may be dimensioned in such a way that it is possible to calibrate the division of the plug compression against the gasket into the mechanical compression of the plug on the gasket, and the compression exerted by the hydrostatic pressure of the fluid, so as to reach the best sealing assurances, and the lowest resistance to the movement of the plug.

The mechanical compression of the gasket against the plug is substantially given by the difference between the inside diameter of the gasket and the outside diameter of the plug, and by the elasticity or compressibility of the gasket, whereas the compression exerted by the flow depends on how big is the component of the useful surface being oriented parallel to the axis of the gasket and, obviously, on the pressure of the intercepted fluid.

Therefore, both the manual operation and the operation by servo-controllable actuators, may be performed by exerting a minimum operating force on the plug. This has positive effects on the cost and on the dimensions of the valve controls, both hand- and motor-operated, as well as on the life and reliability of the valve.

Since the sealing compression between the plug and the gasket is at least partially exerted by the pressure of the fluid the highest functional reliability of the valve is reached for increasing fluid pressures. As the fluid pressure on the plug and on the gasket increases, the compression of the surfaces between which said two parts are meant to seal increases accordingly, whereas the gasket, i.e. the inner active part thereof, is wedged by a higher force, between the two parallel contact surfaces, which are transverse to the flow direction or to the axis of the gasket and/or to the passage span.

Moreover, since the precompression of the gasket must not be determined as dependent on the highest operating pressure, but on the lowest operating conditions, an enormous difference is observed in the operating effort especially at low pressures, said benefits being attenuated at higher pressures, as the maneuverability depends increasingly on the friction of the maneuver axle in the seats.

According to a further preferred characteristic of the invention the control spindle of the plug is operated by a gear and worm drive. Particularly, when the valve is almost wholly made of plastic, the worm and gear drive may also be made of plastic, the worm being advantageously of the so-called globoidal type. In this case, the peripheral axial edge of the gear teeth has a shape substantially corresponding to the inside diameter of the worm thread, whereas the thread extending all along the worm does not wind about a cylindrical surface, but about a recessed surface, whose recess corresponds to the gear radius.

While this type of drive is very expensive when it is manufactured from metal, its manufacture from plastic is much simpler, and the gear and the worm may be manufactured through a usual injection molding process.

From a mechanical point of view, the precise shape coupling between the gear and the worm allows several teeth to engage, substantially for their whole extension, with the worm, whereby the drive, though being made of plastic, is arranged to withstand notably higher stresses, without producing an early deterioration or wear of the worm nor of the gear. This is achieved while keeping the manufacturing and maintenance costs at a low level.

A further important consideration about the throttle valve according to the invention is that it is a throttle valve being perfectly symmetrical with respect to the flow direction. The plug and the gasket have sealing contact surfaces having no substantial component transverse to the flow direction, but only being oriented substantially parallel thereto.

Moreover, said sealing contact surfaces are centred with respect to the median plane of the valve, which is transverse to the flow direction, and contains the axis of rotation of the plug. The plug disc is mounted in such a way as to be centred with respect to the diametrical axis of rotation thereof, and cooperates with the gasket, i.e. with the part thereof, by its annular peripheral rim, which is substantially cylindrical, or even possibly slightly crowned, particularly having the form of a sphere sector, anyway always being symmetrical to the median plane of the plug, which contains the axis of rotation. The surface of the part of the gasket, cooperating with the plug disc, is also cylindrical. This construction is advantageous in that it provides that the valve is perfectly symmetrical with respect to the flow direction, allowing it to be mounted in pipelines which can carry fluids in both flow directions, with no need to account for correct positioning of the valve with respect to the relevant flow direction. As far as construction is concerned, the valve according to the invention may be manufactured less expensively than other types of valve, particularly valves having a plug which is eccentric with respect to the axis of rotation, and having conical plug/gasket contact surfaces. In fact, these valves require more complex molds, particularly made of plastic and manufactured by injection molding, and in addition, the conical surfaces often require an additional manufacturing phase, in which they are ground.

The symmetry of the valve according to the invention allows to obtain two diametrically opposite closing positions for the plug. This involves the advantage that the driving means of the plug and of the gasket are prevented from being worn in one direction or on one side only.

With respect to well-known valves having a symmetrical construction, the valve according to the invention has the advantages of a lower resistance to drive the plug, which advantages are obtained thanks to the eccentric arrangement of the axis of rotation to the plug disc. These advantages are obtained while keeping the advantages deriving from the centred or symmetrical position of the axis of rotation to the plug disc, and obviating, at the same time, the drawbacks of the asymmetrical or eccentric arrangement of the axis of rotation to the plug disc.

The characteristics of the invention and the advantages derived therefrom will appear more clearly from the following description of a preferred embodiment illustrated, not by way of restriction, in the annexed drawings, in which.
Fig. 1 is a perspective view of a throttle valve according to the invention,
Fig. 2 is a frontal view of the valve according to fig. 1, as seen in the direction of the axis of the passage opening for the fluid flow,
Fig. 3 is a cross section with respect to a plane parallel to the median central axis of the plug and of the valve seat,
Fig. 4 is a perspective view of the sealing gasket for the valve according to the previous figures,
Fig. 5 shows the gasket according to fig. 4,through half exposed and half sectional views,
Fig. 6 is a cross section of the gasket with respect to a median plane, parallel to the axis of the gasket,
Fig. 7 is a magnified sectional view of a detail, relating to the gasket, to the peripheral end edge of the plug, and to the valve seat,
Fig. 8 is a view like fig. 7. in which a predetermined hydrostatic pressure is exerted by the intercepted fluid on the plug and on the gasket,
Fig. 9 is a sectional view of the valve according to the previous figures, with respect to a plane parallel to the axis of the control spindle,
Fig. 10 is a top plan view of the drive according to fig. 9,
Fig. 11 is a magnified view of the detail relating to the area in which the worm is engaged with the gear,
Fig. 12 is a perspective view of a variant embodiment of the valve according to the previous figures, and
Fig. 13 shows the valve of fig. 12 associated to the two flanges, illustrated with dotted lines, and to spacers, illustrated with continuous lines.

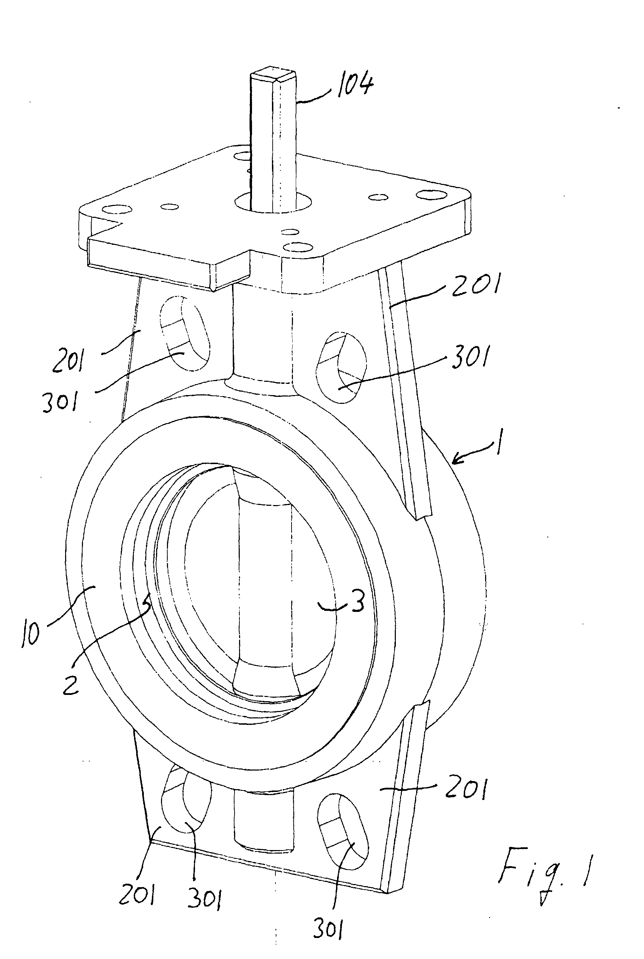

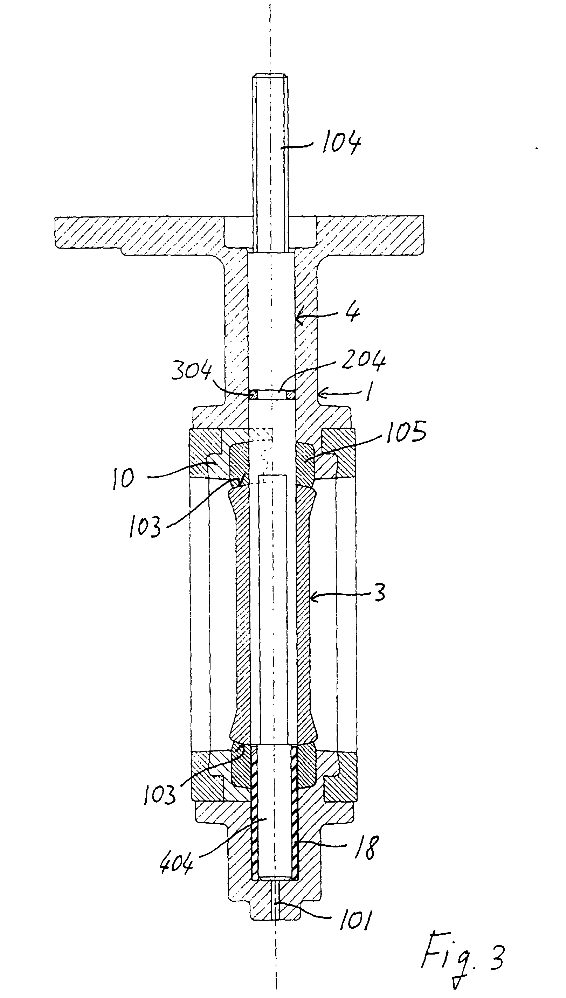

Referring to the figures1, 2 and 3, a throttle valve comprises a valve body 1, in which there is provided a passage duct, having a substantially cylindrical shape. The passage duct forms a valve seat 2 cooperating with a throttle plug 3, having the form of a disc. A transverse spindle 4, perpendicular to the passage duct is radially fixed to the throttle plug 3, and projects out of the peripheral edge of the latter on both diametrically opposed sides, whereas one of the ends of the control spindle 4 projects outwardly with a non-round grip end 104, which may be connected to a hand-controlled lever or to a member of the motor-driven actuator.

In the intermediate region between the non-round grip end 104 and the plug 3, the spindle 4 has an annular throat 204, in which a sealing gasket 304 of the o-ring type is inserted. The opposite end 404 of the spindle 4 is held in a hole of the valve body 1, a bush 18 made of a material having a very low friction factor being interposed there between, whereas the bottom of the hole is outwardly open, by means of a vent or relief duct 101.

Coinciding with the plug 3, which is perfectly perpendicular to the axis of the passage duct, the valve seat 2 has a substantially annular gasket 5, which is held in an annular groove or throat 6, formed in the wall of the passage duct, for cooperation with the peripheral end edge of the throttle plug 3. The latter has a shape which substantially corresponds to the span of the passage duct, and its outside diameter is slightly shorter than the inside diameter of the passage duct.

The gasket 5 has an annular closed shape, with two integral rings 105, made of the same material, at the spindle 4 level. The rings 105 are oriented in such a way that their axis is substantially diametrical to the annular gasket 5 and are coaxial to each other. When the gasket 5 is in the mounted condition, the end sides of the rings 105, facing the plug 3, cooperate with coaxial annular flattenings 103, of the end edge of the plug 3, which, at the area for junction with the control spindle 4 has an annular shape, coaxial to that of the rings 105, and surrounds the end connecting the spindle 4 to the plug 3.

An annular throat 6 for housing the annular gasket 5 is provided in the duct, in a position coinciding with and coaxial to the end edge of the plug 3. In the areas intended for the passage of the spindle 4, the throat 6 has a shape corresponding to that of the rings 105. Advantageously, the rings 105 have radially inner end surfaces 405 and radially outer end surfaces 305, with respect to the axis of the passage duct, which are inclined symmetrically with respect to the median plane of the throat 6. This inclination is such that, the ideal prolongations of said end surfaces of the rings 105 intersect at the axis of the spindle 4, in a radially outer direction with respect to the axis of the passage duct. The annular flattenings 103 around the areas for junction the spindle 4 to the plug 3 are also inclined substantially accordingly.

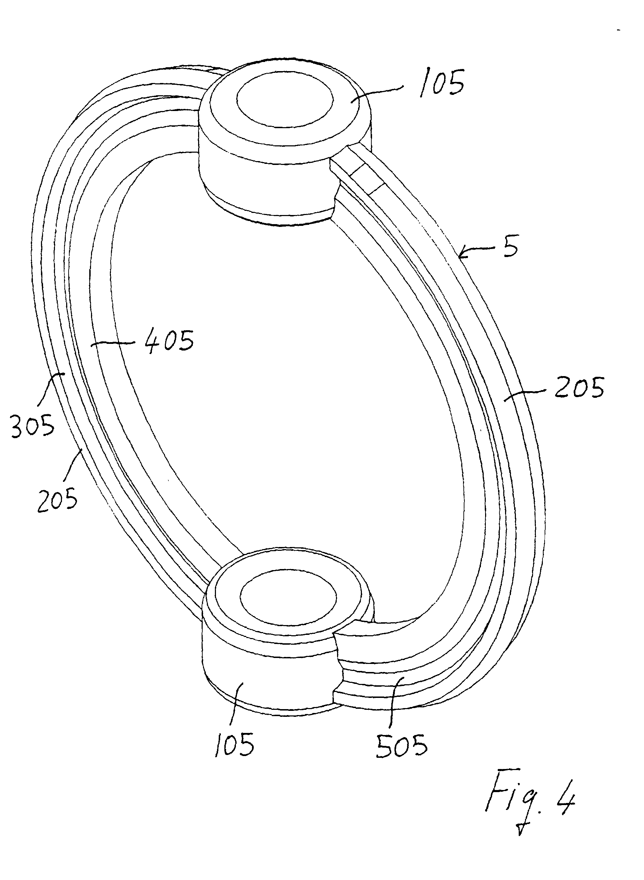

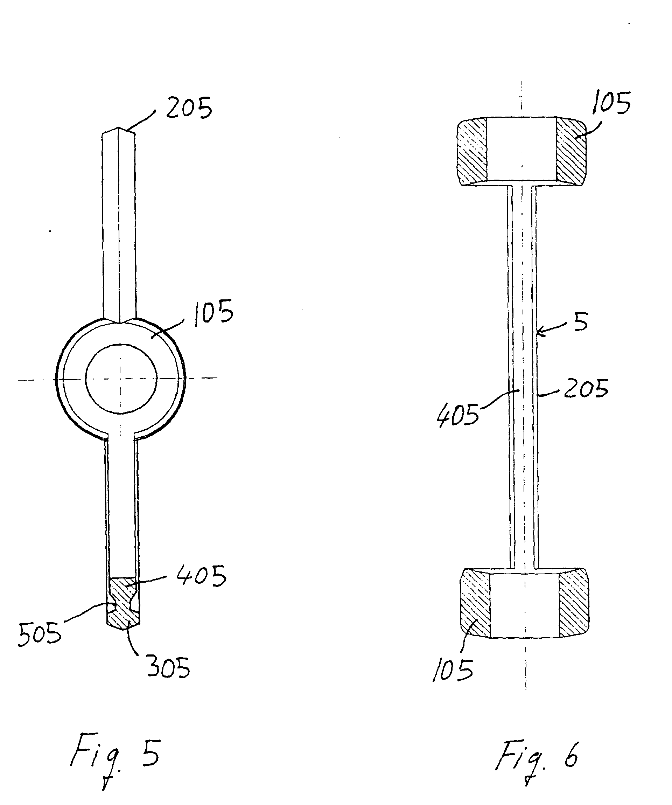

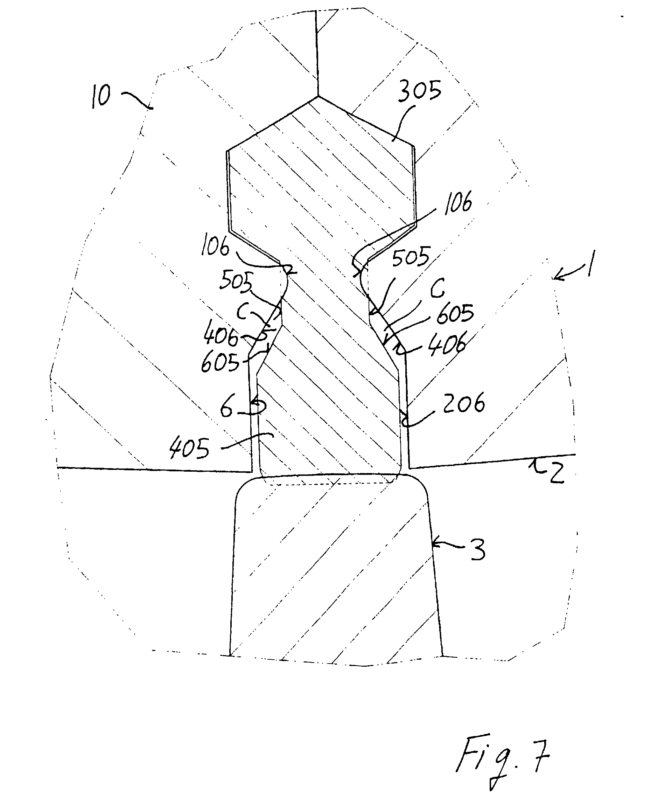

With reference to figs. 4 to 7, the annular gasket 5 has two branches 205, having an annular sector, which are symmetrically identical with respect to the axis of the rings 105. Said two branches 205 consist of a radially outer part and a radially inner part, indicated as 305 and 405 respectively. The two parts 305,405 are connected by an intermediate thin area, formed by two substantially intermediate and coincident grooves 505 on the two faces of the annular gasket 5. The radially outer part 305 has a substantially polygonal section, particularly hexagonal, whereas the radially inner part 405 terminates with one radially inner substantially flat end, particularly having rounded corners.

The throat 6 forming the housing has a clamping narrowing 106, locking the gasket 5 in position, corresponding to the grooves 505 of the annular gasket 5. While the radially outer part of the throat 6 is dimensioned in such a way as to adhere against the radially outer part 305 of the annular gasket 5, locking it in position, the radially inner part 206 of the throat 6, with respect to the narrowing 106, is wider than the radially inner part 405 of the gasket 5. Further, the clamping neck or narrowing 106 has such a conformation that, when the gasket 5 is in the mounted position, its lateral walls 406 facing the radially inner part 405 of the gasket 5 are at a certain distance from the lateral wall connecting the grooves 505 to the radially inner part 405 of the gasket 5, forming two C-shaped chambers, like an annular sector which, thanks to the smaller width of the radially inner part 405 of the gasket 5 with respect to the associated part 206 of the throat 6, communicate with the passage duct. The whole is dimensioned in such a way that the diameter of the gasket 5 is slightly longer than the outer edge of the mouth of the throat 6, 206 for housing and clamping the gasket 5, whereas the outside diameter of the plug disc 3 substantially corresponds to, or is slightly shorter, within tolerance limits, than that of the passage duct.

The projection of the inner part 405 of the gasket 5 is such that, by moving the plug 3 into the closing position, the plug exerts a certain compression on the inner part 405 of the annular gasket 5, requiring, however, a small effort, and ensuring a sufficient sealing effect when intercepting fluid at very low pressure. This compression is calibrated, by appropriate dimensioning operations, in such a way as to reduce to a certain level the necessary effort to move the plug 3.

The compression surfaces 605 connecting the grooves 505 to the radially inner walls 405 of the gasket 5 have an inclined orientation, such as to provide a component transverse and a component parallel to the flow direction, i.e. to the axis of the passage duct.

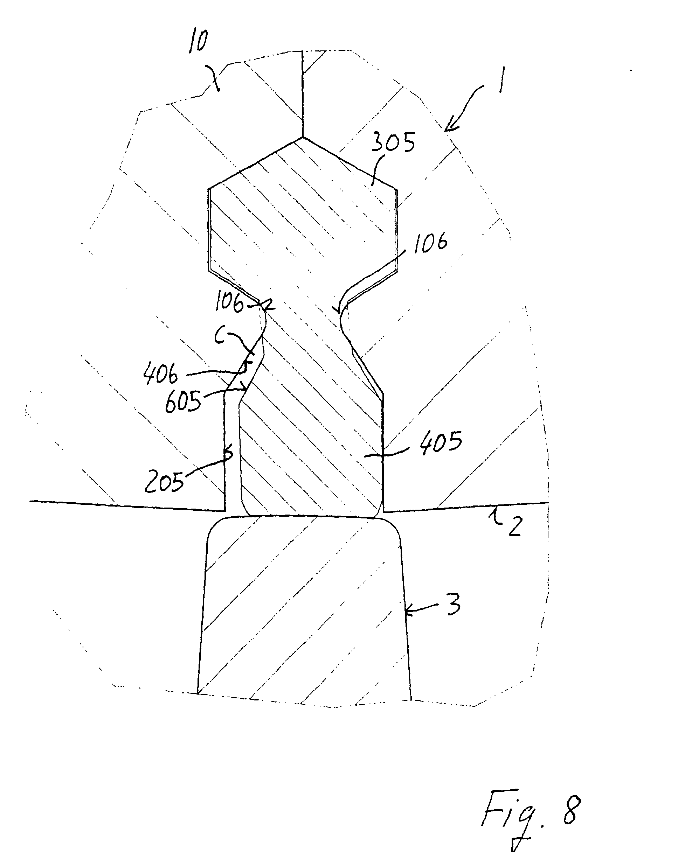

By increasing the pressure of the intercepted fluid on the plug 3 when the latter is in the closing condition, the fluid, also penetrating the C-shaped chambers, exerts a hydrostatic pressure on the surfaces 605, generating a component of axial compression of the inner part of the gasket 5 against the lateral wall of the radially inner part 206 of the throat 6, and a component of radial compression of the inner part 405 of the gasket 5 against the end edge of the plug 3. Particularly, the inner part 405 of the gasket 5 is pushed by the hydrostatic pressure of the intercepted fluid to wedge against the walls, transverse to each other and consisting of the end edge of the plug 3, and of the lateral wall of the inner part 206 of the housing throat 6. The inclination of the surfaces 605 and their extension are chosen in such a way that the radial compressive force of the inner part 405 of the gasket 5 against the plug 3 is stronger than the push exerted radially, but in the direction of the gasket 5 moving away from the end edge of the plug 3, by the pressure of the fluid, tending to wedge between said two mutual contact surfaces. This condition is illustrated in fig. 8.

Thanks to the expedients described herein before, by a predetermined minimum effort, the sealing effect is ensured up to predetermined very low pressures of the intercepted fluid, since the difference between the diameter of the plug 3 and the diameter of the gasket 5 provides a first minimum mutual compression of said two parts. As the hydrostatic pressure in the intercepted fluid increases, the fluid pressure itself contributes to the increase of the compression between the gasket 5 and the plug 3, to a greater extent than the force exerted by the pressure in the direction of detachment and penetration between the gasket 5 and the plug 3.

Therefore, moving the plug 3 from one to the other of the two positions is much less fatiguing, since the plug 3 does not have to press the gasket 5 with the force required to ensure the sealing effect, even for high pressures of the intercepted fluid. This allows for small sizes of the valve parts, especially of the driving means, which will not have to support considerable loads and dynamic stresses.

According to the invention the throat 6 consists of two parts, which divide it along the median transverse plane of symmetry. One of the parts is integrally formed in the valve body 1, whereas the other consists of a removable ring 10, which is clamped against the gasket 5, and against the valve body 1, by specifically provided screws, or by means of clamping flanges of the corresponding union to the valve.

In this way, the throat 6 for housing and clamping the gasket 5 is completely accessible laterally, and the gasket 5 may be simply slipped into its correct position, with the help of the ring 10, thus substantially maintaining a one-piece construction of the valve body 1.

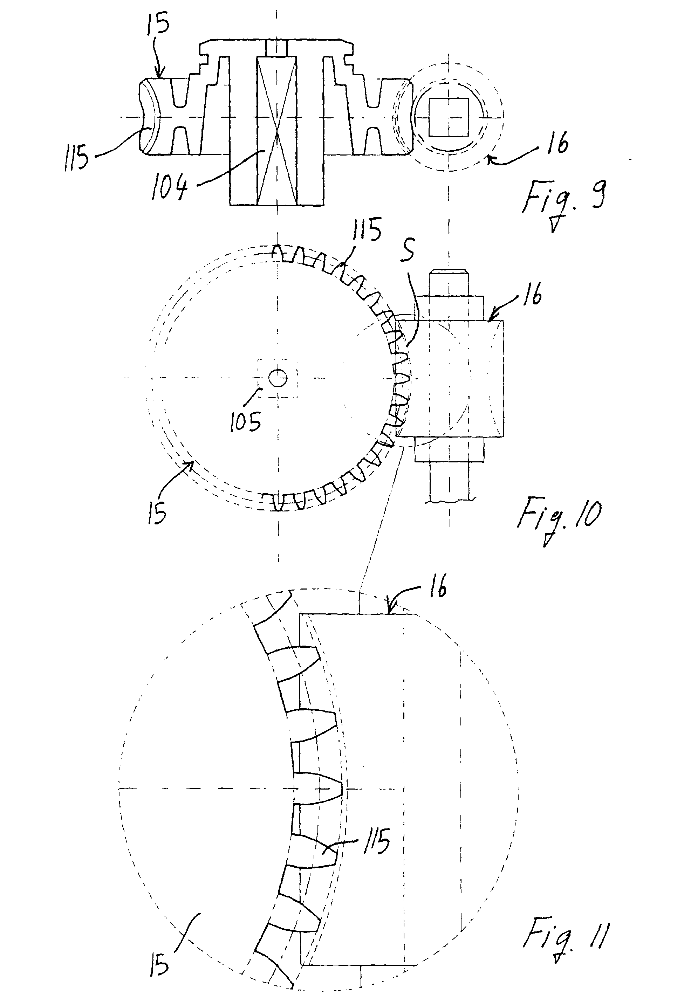

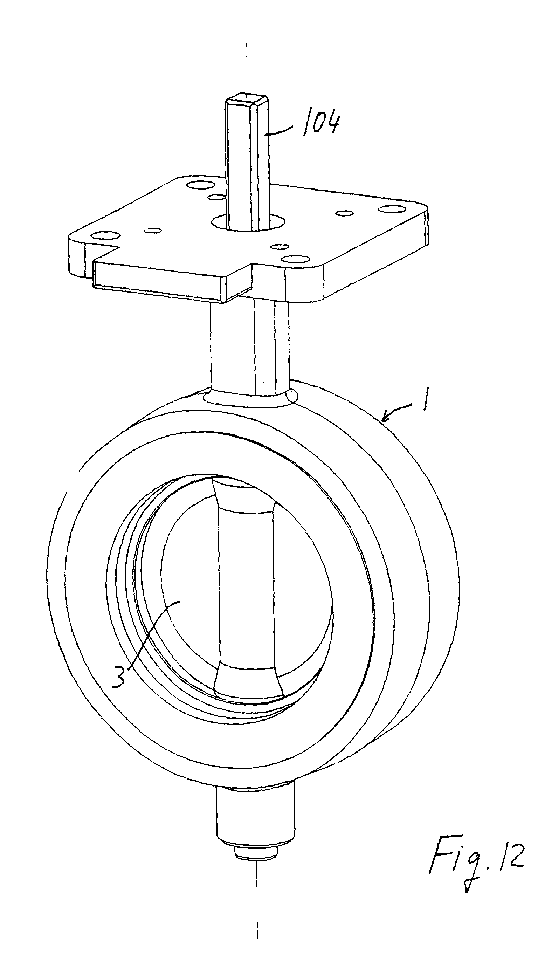

With reference to figures 9 to 11, the invention provides that the spindle 4 for controlling the plug 3 be rotatably driven by a gear 15 and worm 16 drive. Since said drive may be exposed to strong stresses, advantages may be taken from providing the worm 16 and the gear 15 with so-called globoidal profiles, in which the rib forming the thread of the worm 16 is not wound around a cylindrical surface, but around a rotatably symmetrical surface, which is arched to an extent corresponding to the radius of curvature of the gear 15, whereas the teeth 115 of the gear 15 are not straight, but curved conjugately with respect to a radius of curvature of the worm 16, particularly conjugately to the minimum radius of curvature of the worm 16.

Thanks to this expedient, the worm 16 and the gear 15 do not only engage for a few teeth and substantially at the mutually tangent surfaces, but more teeth of the gear 15 simultaneously cooperate with the thread of the worm 16. This type of drive allows for a reduction of wear and especially for the use of weaker materials, such as plastics, for its manufacture. Thanks to this type of drive, the gear 15 and the worm 16 may be made of plastic, like the rest of the valve.

The use of plastic allows for a considerable reduction of difficulties and costs for manufacturing the drive, since the gear 15 and the worm 16 may be made through injection molding. This manufacturing technique allows to easily obtain constructive parts with a complex shape.

The expedient according to figs. 9 to 11 may be also provided separately from the particular manufacturer of the throttle valve, and may be used in any type of valves, so as to provide, with little expense and in a functionally effective manner, a reduction of the effort for the manual operation of the valve. The dimensions and the particular conformation of the gear 15 and of the worm 16 may vary depending on needs and on applications.

By providing a gear 15 and worm 16 drive of the globoidal type, plastic may be used for its manufacture, thus obtaining safe, reliable and functionally lasting drives.

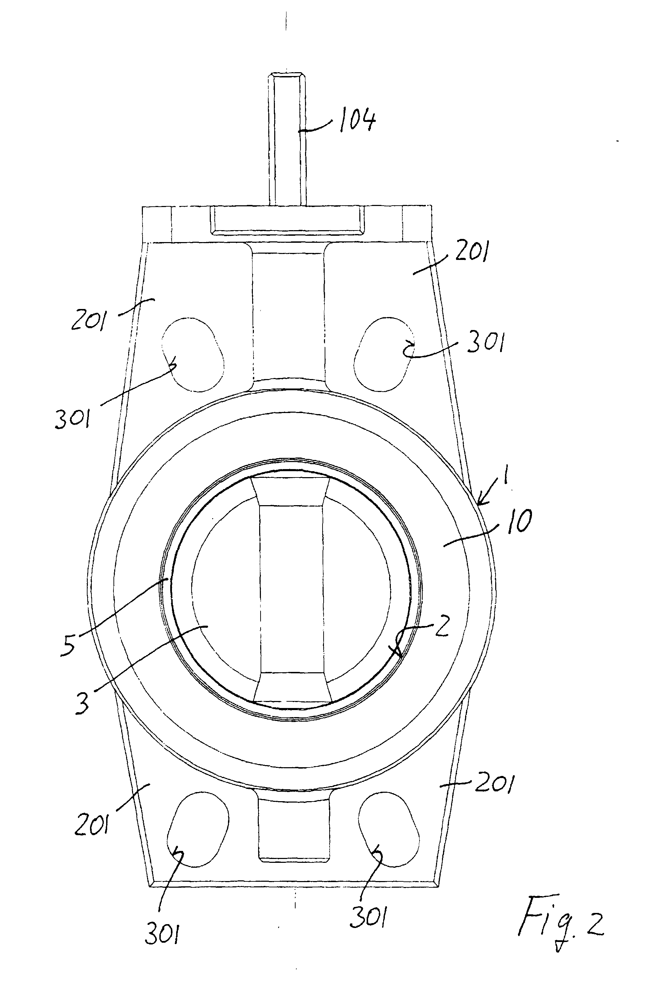

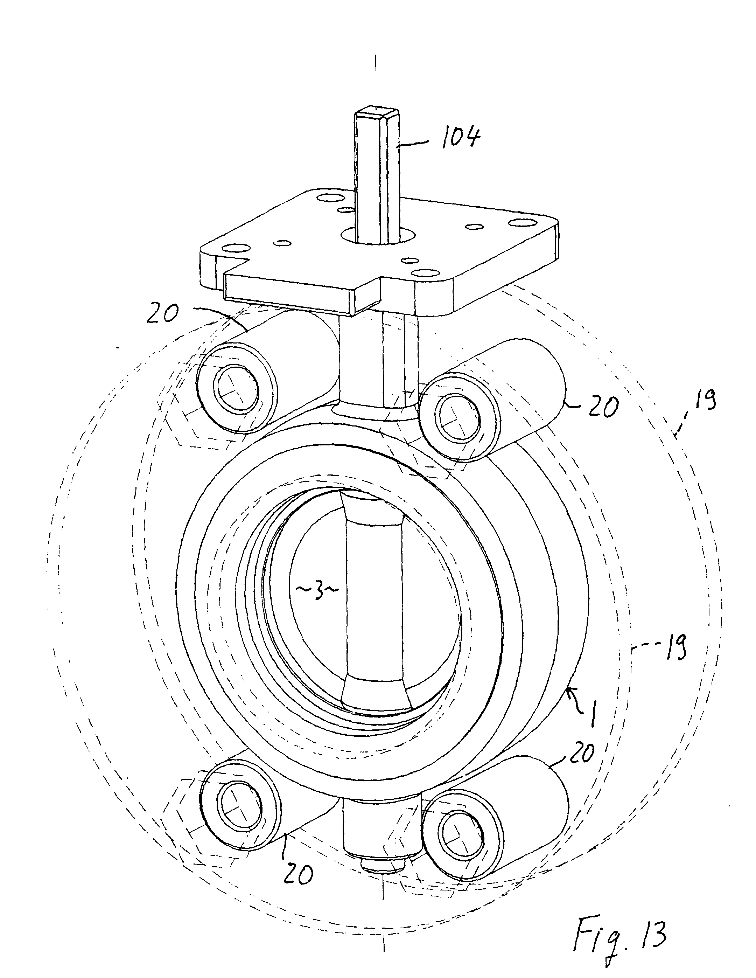

With reference to a variant illustrated in figs. 12 and 13, in this case the valve body 1 has a circular aspect also externally, the reinforcing wings, indicated as 201 in figs 1 and 2 of the previous embodiment having been removed.

In the embodiment of figs. 1 and 2, the valve body 1 has an annular part, especially cylindrical, with coaxial and opposite extensions for housing the spindle 4, said extensions being connected to the valve body 1 by means of reinforcing wings 201, provided with radial slots 301 for the passage of the bolts for clamping the flanges. The latter are clamped against each other by the bolts and, at the same time, against the valve body 1.

In the second embodiment, the lack of the wings 201 weakens the valve body 1, so the relief hole 101, connecting the hole for housing the end 404 of the spindle 4 with the outside is advantageous, as it allows the seat of the gasket 5 that is the radially outer part thereof, to communicate with the outside. In both embodiments in case of strong water hammers or high pressures, the fluid under pressure may penetrate between the gasket 5 and the inner wall of the radially outer area of the valve body 1, and in this case, and especially in the second embodiment, the valve body 1 is subjected to high pressures. The relief duct 101 allows said pressures to be released without stressing the valve body 1. On the other hand, this allows to use a valve having a construction according to the example of figs. 12 and 13, with considerable material savings and a considerable simplification of molds.

With particular reference to fig. 13, since, with the lack of the reinforcing wings 201, centering guides for the two opposite flanges for connection to the inlet and outlet ducts are also lacking, there are provided spacing bushes 20, whose thickness corresponds to the radial distance of the clamping bolt from the valve body 1.

While in the previous example, in order to ensure that different flanges with different dimensions are used, the passage holes 301 in the reinforcing wings 201 have the form of radially oriented slots, in the second embodiment, there may be provided spacing bushes 20, having walls with different thickness according to the type of flange used. According to an improvement, the outer peripheral wall of the valve body 1 may have shapes complementary to those of the bushes, for example, one or more recesses, whose axial section has the shape of a circular sector, with a radius substantially corresponding to that of the bushes, or V-shaped notches, which may prevent the circular bushes to roll down along the outer periphery of the valve body. Alternatively, the bushes themselves may have an outer profile complementary to that of the valve body, in the mutual contact area.

Naturally, the invention is not limited to the embodiment described and illustrated herein, but may be greatly varied, especially as regards construction, without departure form the guiding principle disclosed above and claimed below.

## Claims

1. A throttle valve comprising a valve body (1), a throttle plug (3), which cooperates with a valve seat (2), said seat having a substantially annular gasket (5) which, when the throttle plug (3) is in the closing position, adheres with a certain compressive force, transverse to the flow direction and to the axis of the valve seat (2), against the peripheral end edge of the throttle plug (3), wherein at least a part of the compressive force acting between the gasket (5) and the peripheral end edge of the throttle plug (3) is exerted by the hydrostatic pressure of the fluid intercepted when the valve is in the closing condition, the gasket (5) having compression surfaces (605), at least in some areas, preferably for its whole extension, and in a radially outer position with respect to the surface contacting the peripheral end edge of the throttle plug (3), turned opposite the contact surface between the gasket (5) and the throttle plug (3), and being oriented in such a way that at least one of their directional components is parallel to the flow direction, in order to generate a component perpendicular to the flow direction, and said surfaces (605) being accessible and exposed to the intercepted fluid, where the valve body (1) has a throat (6) for holding said gasket (5), **characterized in that** the throat (6) which forms the seat for clamping and housing the gasket (5) is made of two removably fixable parts (1, 10), which are separated substantially along the median transverse plane of symmetry of the annular throat (6), and that the valve body (1) has at least one relief duct (101) communicating with the outside and with the throat (6) for housing the annular gasket (5).

2. A valve as claimed in claim 1, **characterized in that** the annular gasket (5) has a radially outer annular part (305), and a radially inner annular part (405), whereas the valve body (1) has a throat (6) for holding said gasket (5) including a seat for clamping said radially outer part (305), and a seat (206) for housing the radially inner part (405) of the sealing gasket (5), which is slightly bigger than said radially inner part (405) of the gasket (5), so as to allow the axial and radial movement within predetermined limits.

3. A valve as claimed in claims 1 or 2, **characterized in that** the throat (6), i.e. its part (206) associated to the radially inner part (405) of the gasket (5) is conformed in such a way as to have ducts, apertures, passages and/or chambers (C) accessible to the fluid on the side of the inner part (405) of the gasket (5), which is provided with the compression surfaces (605) having at least one directional component parallel to the flow, in order to generate a compression perpendicular to the intercepted fluid.

4. A valve as claimed in claims 2 or 3 **characterized in that** the gasket (5), i.e. its radially inner part (405) and the housing seat (206) associated thereto respectively have ducts, apertures, passages and/or chambers (C) accessible to the fluid on both sides with respect to a median transverse plane, particularly the construction of said two parts being symmetrical with respect to this plane.

5. A valve as claimed in one or more of the preceding claims, **characterized in that** the compression surfaces (605) of the gasket (5), pressing against the plug (3), consist of the lateral walls of two substantially median coincident annular grooves (505), formed in the two faces of the annular gasket (5), said grooves (505) forming an annular neck for connecting the inner part (405) and the outer part (305) of the gasket (5), the seats for clamping the outer part (305) and those (206) for loosely housing the inner part (405) of the gasket (5) being jointed by an annular compressing narrowing (106), said narrowing (106) having on the side facing the compression surfaces of the inner part (405) of the gasket (5) lateral walls which extend at a certain distance from said compression surfaces (605), thereby forming, where the housing seat (206) is wider than the thickness of the inner part (405) of the gasket (5), substantially annular chambers (C), which may be accessed, on the corresponding exposed side of the throttle plug (3), by the fluid intercepted when the plug (3) is in the closing position.

6. A valve as claimed in one or more of the preceding claims, **characterized in that** the seat (206) for housing the radially inner part (405) of the gasket (5) and said radially inner part (405) of the gasket (5) have cooperating annular sealing contact surfaces, which are oriented transverse to the axis of the gasket (5) and to the flow direction, in combination with walls or surfaces (605), and particularly, are exposed to the hydrostatic pressure of the fluid and have at least one component transverse to the flow direction of the fluid, whereby the hydrostatic pressure of the fluid also acts in the direction of axial sealing compression of the lateral surfaces and/or walls of the gasket (5), against the corresponding walls and/or surfaces of the housing seat (206).

7. A valve as claimed in claim 6, **characterized in that** the seat (206) for housing and the seat for clamping the two parts (305, 405) of the gasket (5) consist of a throat having a median narrowing (106), so that the lateral faces on the inner part (405) of the gasket (5) cooperate with the corresponding opposite lateral wall of the housing seat (206) to provide-sealing contact surfaces, transverse to the flow direction.

8. A valve as claimed in one or more of the preceding claims, **characterized in that** the valve body (1) is substantially made of one piece, and has an annular cavity in the area of the throat (6), which forms the seats for clamping and housing (206) the gasket (5), there being provided an annular insert (10), which may be removably fixed in said annular cavity, and the opposite faces of the annular cavity and of the annular insert being provided with grooves, whose profile corresponds to one half of the cross section of said throat (6).

9. A valve as claimed in one or more of the preceding claims, **characterized in that** the annular sealing gasket (5) projects, to a certain extent, beyond the opening of the housing seat (206), towards the end edge of the plug (3), whereas the plug (3) has a diameter, which is substantially identical or slightly shorter than that of the passage duct, but longer than the inside diameter of the gasket (5).

10. A valve as claimed in one or more of the preceding claims, **characterized in that** the end edge of the plug (3), when the latter is in the passage closing position, and the lateral wall of the seat (206) for housing the radially inner part (405) of the gasket (5), respectively facing the side exposed to pressure of the intercepted fluid form two substantially angling surfaces, which wedge the radially inner part (405) of the gasket (5) when the hydrostatic pressure of the intercepted fluid acts there upon.

11. A valve as claimed in one or more of the preceding claims, **characterized in that** the plug (3) is provided with a control spindle (4), which is radial with respect to the annular gasket (5), the latter has an integral sealing ring (105) at the control spindle (4) level, whose axis is parallel to the axis of the control spindle (4), i.e. perpendicular to the axis of the gasket (5), and being meant to surround it, which ring (105) is held on a corresponding throat in the valve seat (2), which is connected to the throat (6) and cooperates with a peripheral annular surface (103), corresponding to the plug (3), which is placed at the point in which the spindle (4) is inserted in the plug (3) and is connected without breaks to the rest of the peripheral end edge of the plug (3).

12. A valve as claimed in claim 11, **characterized in that** the spindle (4) also extends on the diametrically opposite side of the plug (3), whereas the gasket (5), the plug (3) and the valve seat (2) have the same construction as claimed in the preceding claim 11, also at said diametrically opposite side.

13. A valve as claimed in one or more of the preceding claims, **characterized in that** the control spindle (4) of the plug (3) is operated by a gear and worm drive (15,16), in which the worm (16) and/or the gear (15) have teeth or mutual engagement surfaces with a globoidal profile.

14. A valve as claimed in claim 13, **characterized in that** the gear (15) and the worm (16) are made of plastic.

15. A valve as claimed in one or more of the preceding claims 13 or 14, **characterized in that** the axial peripheral edge of teeth of the gear (15) is profiled so as to substantially correspond to the minor diameter of the thread of the worm (16), whereas the thread extending along the worm (16) has an exterior surface which is inwardly curved according to the radius of curvature of the gear (15).

16. A valve as claimed in one or more of the preceding claims, **characterized in that** the valve body has at least one relief duct (101) communicating with the seat for housing the plug control spindle (4, 404).

17. A valve as claimed in one or more of the preceding claims, **characterized in that** it comprises an annular, especially cylindrical valve body, having coaxial opposite extensions for housing the spindle (4), said extensions and the valve body being connected by reinforcing wings (201), provided with radial slots (301), for the passage of the flange clamping bolts.

18. A valve as claimed in one or more of the preceding claims 1 to 16, **characterized in that** it comprises an annular, especially cylindrical valve body, having coaxial opposite extensions for housing the spindle (4) there being provided, for each bolt for clamping opposite flanges connecting to the valve body (1), a corresponding spacing and centering bush (20), whose wall thickness corresponds to the appropriate distance between the bolt and the valve body (1), there being provided bushes (20) having different wall thicknesses, corresponding to the different types of flanges and to the different radial positions of the clamping bolts.

19. A valve as claimed in claim 18, **characterized in that** the spacing and centering bushes (20), and at least the contact areas of the valve body (1), associated thereto, may have the former, the latter or both, complementary profiles for mutual positioning.

20. A throttle valve as claimed in one or more of the preceding claims, **characterized in that** the plug (3) and the gasket (5, 405) have sealing contact surfaces having no substantial component transverse to the flow direction, but only being oriented substantially parallel to said direction.

21. A throttle valve as claimed in claim 20, **characterized in that** said sealing contact surfaces are centered with respect to the median plane of the valve, or of the driving axis of the plug (3) which is transverse to the flow direction, and contains the axis of rotation of the plug (3).

22. A throttle valve as claimed in one or more of the preceding claims, **characterized in that** the contact surfaces between the plug (3) and the gasket (5, 405) are annular and substantially cylindrical, consisting of the facing peripheral rims of the gasket (5, 405) and of the plug (3), the one, the other or both surfaces possibly being slightly crowned or rounded.

## Patentansprüche

1. Drosselventil, das einen Ventilkörper (1) und ein Drosselküken (3) umfaßt, das mit einem Ventilsitz (2) zusammenwirkt, wobei der Sitz eine im wesentlichen ringförmige Dichtung (5) aufweist, die, wenn sich das Drosselküken (3) in der Schließposition befindet, mit einer gewissen Kompressionskraft quer zur Strömungsrichtung und zur Achse des Ventilsitzes (2) an der Umfangsendkante des Drosselkükens (3) haftet, wobei mindestens ein Teil der Kompressionskraft, die zwischen der Dichtung (5) und der Umfangsendkante des Drosselkükens (3) wirkt, durch den hydrostatischen Druck des Fluids ausgeübt wird, das abgesperrt ist, wenn sich das Ventil im Schließzustand befindet, wobei die Dichtung (5) mindestens in einigen Bereichen, vorzugsweise in ihrer Gesamausdehnung, und in einer radial äußeren Position im Verhältnis zu der Fläche, die die Umfangsendkante des Drosselkükens (3) berührt, Kontaktflächen (605) aufweist, die gegenüber der Kontaktfläche zwischen der Dichtung (5) und dem Drosselküken (3) gedreht und so ausgerichtet sind, daß mindestens eine ihrer Richtungskomponenten parallel zur Strömungsrichtung verläuft, um eine Komponente senkrecht zur Strömungsrichtung zu erzeugen, und daß die Flächen (605) für das abgesperrte Fluid zugänglich und dem abgesperrten Fluid ausgesetzt sind, wobei der Ventilkörper (1) eine Verengung (6) zur Aufnahme der Dichtung (5) besitzt, **dadurch gekennzeichnet, daß** die Verengung (6), die den Sitz zum Festklemmen und zur Aufnahme der Dichtung (5) bildet, aus zwei entfernbar zu befestigenden Teilen (1, 10) besteht, die im wesentlichen entlang der mittleren Symmetriequerebene der ringförmigen Verengung (6) getrennt sind, und daß der Ventilkörper (1) mindestens einen Entlüftungskanal (101) besitzt, der mit der Umgebung und mit der Verengung (6) zur Aufnahme der ringförmigen Dichtung (5) kommuniziert.

2. Ventil nach Anspruch 1, **dadurch gekennzeichnet, daß** die ringförmige Dichtung (5) ein radial außenliegendes ringförmiges Teil (305) und ein radial innenliegendes ringförmiges Teil (405) besitzt, während der Ventilkörper (1) eine Verengung (6) zur Aufnahme der Dichtung (5) mit einem Sitz zum Festklemmen des radial außenliegenden Teils (305) sowie einen Sitz (206) zur Aufnahme des radial innenliegenden Teils (405) der Dichtung (5) besitzt, der geringfügig größer als das radial innenliegende Teil (405) der Dichtung (5) ist, um die axiale und radiale Bewegung innerhalb vorbestimmter Grenzen zuzulassen.

3. Ventil nach Anspruch 1 oder 2, **dadurch gekennzeichnet, daß** die Verengung (6), d.h. ihr Teil (206), das zum radial innenliegenden Teil (405) der Dichtung (5) gehört, so ausgeführt ist, daß es Kanäle, Öffnungen, Durchgänge und/oder Kammern (C) besitzt, die für das Fluid auf der Seite des innenliegenden Teils (405) der Dichtung (5) zugänglich sind, die mit den Kompressionsflächen (605), die mindestens eine Richtungskomponente parallel zur Strömung aufweisen, ausgestattet ist, um eine Kompression senkrecht zum abgesperrten Fluid zu erzeugen.

4. Ventil nach Anspruch 2 oder 3, **dadurch gekennzeichnet, daß** die Dichtung (5), d.h. ihr radial innenliegendes Teil (405) bzw. der dazugehörige Gehäusesitz (206), Kanäle, Öffnungen, Durchgänge und/oder Kammern (C) besitzt, die für das Fluid auf beiden Seiten im Verhältnis zu einer mittleren Querebene zugänglich sind, wobei insbesondere die Ausführung der beiden Teile im Verhältnis zu dieser Ebene symmetrisch ist.

5. Ventil nach einem oder mehreren der vorstehend aufgeführten Ansprüche, **dadurch gekennzeichnet, daß** die Kompressionsflächen (605) der Dichtung (5), die sich gegen das Küken (3) pressen, aus den Seitenwänden von zwei im wesentlichen mittleren zusammenfallenden ringförmigen Nuten (505) bestehen, die in den beiden Stirnflächen der ringförmigen Dichtung (5) ausgebildet sind, wobei die Nuten (505) einen ringförmigen Hals zur Verbindung des innenliegenden Teils (405) und des außenliegenden Teils (305) der Dichtung (5) bilden, wobei die Sitze zum Festklemmen des außenliegenden Teils (305) und diejenigen (206) zur losen Aufnahme des innenliegenden Teils (405) der Dichtung (5) durch eine ringförmige Kompressionseinschnürung (106) verbunden sind, wobei die Einschnürung (106) auf der Seite, die den Kompressionsflächen des innenliegenden Teils (405) der Dichtung (5) zugewandt ist, Seitenwände besitzt, die sich in einem gewissen Abstand von den Kompressionsflächen (605) erstrecken, so daß an der Stelle, an der der Gehäusesitz (206) breiter als die Dicke des innenliegenden Teils (405) der Dichtung (5) ist, im wesentlichen ringförmige Kammern (C) gebildet werden, die auf der entsprechenden ausgesetzten Seite des Drosselkükens (3) für das Fluid zugänglich sind, das abgesperrt ist, wen sich das Küken (3) in der Schließposition befindet.

6. Ventil nach einem oder mehreren der vorstehend aufgeführten Ansprüche, **dadurch gekennzeichnet, daß** der Sitz (206) zur Aufnahme des radial innenliegenden Teils (405) der Dichtung (5) und das radial innenliegende Teil (405) der Dichtung (5) zusammenwirkende ringförmige Dichtungskontaktflächen, die quer zur Achse der Dichtung (5) und zur Strömungsrichtung ausgerichtet sind, besitzen, die in Kombination mit Wänden oder Flächen (605) zusammenwirken, die insbesondere dem hydrostatischen Druck des Fluids ausgesetzt sind und mindestens eine Komponente quer zur Strömungsrichtung des Fluids aufweisen, so daß der hydrostatische Druck des Fluids auch in der Richtung der axialen Dichtungskompression der Seitenflächen und/oder Seitenwände der Dichtung (5) gegenüber den entsprechenden Wänden und/oder Flächen des Gehäusesitzes (206) wirkt.

7. Ventil nach Anspruch 6, **dadurch gekennzeichnet, daß** der Sitz (206) zur Aufnahme und der Sitz zum Festklemmen der beiden Teile (305, 405) der Dichtung (5) aus einer Verengung bestehen, die eine mittlere Einschnürung (106) aufweist, so daß die seitlichen Stirnflächen am innenliegenden Teil (405) der Dichtung (5) mit der entsprechenden gegenüberliegenden Seitenwand des Gehäusesitzes (206) zusammenwirken, um Dichtungskontaktflächen quer zur Strömungsrichtung bereitzustellen.

8. Ventil nach einem oder mehreren der vorstehend aufgeführten Ansprüche, **dadurch gekennzeichnet, daß** der Ventilkörper (1) im wesentlichen aus einem Teil besteht und einen ringförmigen Hohlraum im Bereich der Verengung (6) besitzt, der die Sitze zum Festklemmen und zur Aufnahme (206) der Dichtung (5) bildet, wobei ein ringförmiger Einsatz (10) bereitgestellt ist, der entfernbar im ringförmigen Hohlraum befestigt werden kann, und wobei die gegenüberliegenden Stirnflächen des ringförmigen Hohlraums und des ringförmigen Einsatzes mit Nuten ausgestattet sind, deren Profil einer Hälfte des Querschnitts der Verengung (6) entspricht.

9. Ventil nach einem oder mehreren der vorstehend aufgeführten Ansprüche, **dadurch gekennzeichnet, daß** die ringförmige Dichtung (5) in einem gewissen Umfang über die Öffnung des Gehäusesitzes (206) hinaus zur Endkante des Kükens (3) hin vorspringt, während das Küken (3) einen Durchmesser besitzt, der im wesentlichen mit demjenigen des Durchgangskanals identisch oder geringfügig kürzer, jedoch länger als der Innendurchmesser der Dichtung (5) ist.

10. Ventil nach einem oder mehreren der vorstehend aufgeführten Ansprüche, **dadurch gekennzeichnet, daß** die Endkante des Kükens (3), wenn sich das letztere in der Durchgangsschließposition befindet, bzw. die Seitenwand des Sitzes (206) zur Aufnahme des radial innenliegenden Teils (405) der Dichtung (5), die der dem Druck des abgesperrten Fluids ausgesetzten Seite zugewandt sind, zwei im wesentlichen winkelförmige Flächen bilden, die das radial innenliegende Teil (405) der Dichtung (5) keilförmig einklemmen, wenn der hydrostatische Druck des abgesperrten Fluids darauf einwirkt.

11. Ventil nach einem oder mehreren der vorstehend aufgeführten Ansprüche, **dadurch gekennzeichnet, daß** das Küken (3) mit einer Betätigungsspindel (4) ausgestattet ist, die radial im Verhältnis zur ringförmigen Dichtung (5) angeordnet ist, wobei die letztere einen integralen Dichtungsring (105) auf dem Niveau der Betätigungsspindel (4) besitzt, dessen Achse parallel zur Achse der Betätigungsspindel (4), d.h. senkrecht zur Achse der Dichtung (5) verläuft, und der dafür vorgesehen ist, die Spindel zu umgeben, wobei der Ring (105) an einer entsprechenden Verengung im Ventilsitz (2) gehalten wird, der mit der Verengung (6) verbunden ist und mit einer ringförmigen Umfangsfläche (103), die dem Küken (3) entsprechend ausgeführt ist, zusammenwirkt und an derjenigen Stelle plaziert ist, an der die Spindel (4) in das Küken (3) eingesetzt ist, und der ohne Unterbrechungen mit dem Rest der Umfangsendkante des Kükens (3) verbunden ist.

12. Ventil nach Anspruch 11, **dadurch gekennzeichnet, daß** die Spindel (4) sich auch auf der diametral gegenüberliegenden Seite des Kükens (3) erstreckt, während die Dichtung (5), das Küken (3) und der Ventilsitz (2), wie im vorstehend aufgeführten Anspruch 11 beschrieben, auch auf der diametral gegenüberliegenden Seite die gleiche Ausführung besitzen.

13. Ventil nach einem oder mehreren der vorstehend aufgeführten Ansprüche, **dadurch gekennzeichnet, daß** die Betätigungsspindel (4) des Kükens (3) durch einen Zahnrad- und Schneckenantrieb (15, 16) betätigt wird, wobei die Schnecke (16) und/oder das Zahnrad (15) mit Zähnen ausgestattete oder für gegenseitigen Eingriff vorgesehene Flächen mit einem Globoidprofil besitzen.

14. Ventil nach Anspruch 13, **dadurch gekennzeichnet, daß** das Zahnrad (15) und die Schnecke (16) aus Kunststoff bestehen.

15. Ventil nach einem oder mehreren der vorstehend aufgeführten Ansprüche 13 oder 14, **dadurch gekennzeichnet, daß** die axiale Umfangskante der Zähne des Zahnrads (15) ein solches Profil aufweist, daß es im wesentlichen dem kleineren Durchmesser des Gewindes der Schnecke (16) entspricht, während das entlang der Schnecke (16) verlaufende Gewinde eine Außenfläche besitzt, die gemäß dem Krümmungsradius des Zahnrads (15) nach innen gekrümmt ist.

16. Ventil nach einem oder mehreren der vorstehend aufgeführten Ansprüche, **dadurch gekennzeichnet, daß** der Ventilkörper mindestens einen Entlüftungskanal (101) besitzt, der mit dem Sitz zur Aufnahme der Kükenbetätigungsspindel (4, 404) kommuniziert. vorstehend

17. Ventil nach einem oder mehreren der vorstehend aufgeführten Ansprüche, **dadurch gekennzeichnet, daß** es einen ringförmigen, insbesondere zylindrischen, Ventilkörper mit koaxialen gegenüberliegenden Ausdehnungen zur Aufnahme der Spindel (4) umfaßt, wobei die Ausdehnungen und der Ventilkörper durch Verstärkungsflügel (201) mit radialen Schlitzen (301) für die Durchführung der zur Flanschbefestigung vorgesehenen Schrauben verbunden sind.

18. Ventil nach einem oder mehreren der vorstehend aufgeführten Ansprüche 1 bis 16, **dadurch gekennzeichnet, daß** es einen ringförmigen, insbesondere zylindrischen, Ventilkörper mit koaxialen gegenüberliegenden Ausdehnungen zur Aufnahme der Spindel (4) umfaßt, wobei für jede Schraube, die gegenüberliegende Flansche mit dem Ventilkörper (1) verbindet, eine entsprechende Abstands- und Zentrierhülse (20) vorgesehen ist, deren Wanddicke dem entsprechenden Abstand zwischen der Schraube und dem Ventilkörper (1) entspricht, wobei Hülsen (20) mit unterschiedlichen Wanddicken vorgesehen sind, die den unterschiedlichen Flanschausführungen und den unterschiedlichen radialen Positionen der Festklemmschrauben entsprechen.

19. Ventil nach Anspruch 18, **dadurch gekennzeichnet, daß** die Abstands- und Zentrierhülsen (20) und mindestens die dazugehörigen Kontaktbereiche des Ventilkörpers (1), oder beide, ergänzende Profile zur gegenseitigen Positionierung aufweisen können.

20. Drosselventil nach einem oder mehreren der vorstehend aufgeführten Ansprüche, **dadurch gekennzeichnet, daß** das Küken (3) und die Dichtung (5, 405) Dichtungskontaktflächen besitzen, die keine wesentliche Komponente quer zur Strömungsrichtung aufweisen, sondern lediglich im wesentlichen parallel zu dieser Richtung ausgerichtet sind.

21. Drosselventil nach Anspruch 20, **dadurch gekennzeichnet, daß** die Dichtungskontaktflächen im Verhältnis zur mittleren Ebene des Ventils oder der Antriebsachse des Kükens (3) zentriert sind, das quer zur Strömungsrichtung angeordnet ist und die Drehachse des Kükens (3) enthält.

22. Drosselventil nach einem oder mehreren der vorstehend aufgeführten Ansprüche, **dadurch gekennzeichnet, daß** die Kontaktflächen zwischen dem Küken (3) und der Dichtung (5, 405) ringförmig und im wesentlichen zylindrisch sind und aus den zugewandten Umfangsrändern der Dichtung (5, 405) und des Kükens (3) bestehen, wobei die eine, die andere oder beide Flächen geringfügig kronenförmig oder abgerundet ausgeführt sind.

## Revendications

1. Soupape d'étranglement comprenant un corps de soupape (1), un bouchon d'étranglement (3) qui coopère avec un siège de soupape (2), ledit siège ayant un joint essentiellement annulaire (5) qui, lorsque le bouchon d'étranglement (3) est dans la position de fermeture, adhère avec une certaine force de compression, transversalement au sens de l'écoulement et à l'axe du siège de soupape (2) contre le bord d'extrémité périphérique du bouchon d'étranglement (3), au moins une partie de la force de compression agissant entre le joint (5) et le bord d'extrémité périphérique du bouchon d'étranglement (3) étant exercée par la pression hydrostatique du fluide intercepté lorsque la soupape est dans l'état fermé, le joint (5) ayant des surfaces de compression (605), au moins dans certaines régions, de préférence sur toute son étendue, et dans une position radialement externe par rapport à la surface en contact avec le bord d'extrémité périphérique du bouchon d'étranglement (3), tournées à l'opposé de la surface de contact entre le joint (5) et le bouchon d'étranglement (3), et étant orientées de telle sorte qu'au moins l'une de leur composantes directionnelles soit parallèle au sens de l'écoulement, afin de produire une composante perpendiculaire au sens de l'écoulement, et lesdites surfaces (605) étant accessibles et exposées au fluide intercepté, là où le corps de soupape (1) a une gorge (6) pour retenir ledit joint (5), **caractérisée en ce que** la gorge (6) qui forme le siège pour serrer et recevoir le joint (5) est constituée de deux parties pouvant être fixées de manière amovible (1, 10), qui sont séparées substantiellement le long du plan de symétrie transversal médian de la gorge annulaire (6), et **en ce que** le corps de soupape (1) a au moins un conduit de décharge (101) communiquant avec l'extérieur et avec la gorge (6) pour recevoir le joint annulaire (5).

2. Soupape selon la revendication 1, **caractérisée en ce que** le joint annulaire (5) a une partie annulaire radialement externe (305) et une partie annulaire radialement interne (405), tandis que le corps de soupape (1) a une gorge (6) pour retenir ledit joint (5), comportant un siège pour serrer ladite partie radialement externe (305) et un siège (206) pour recevoir la partie radialement interne (405) du joint d'étanchéité (5), qui est légèrement plus grand que ladite partie radialement interne (405) du joint (5), de manière à permettre un mouvement axial et radial dans des limites prédéterminées.

3. Soupape selon la revendication 1 ou 2, **caractérisée en ce que** la gorge (6), c'est-à-dire sa partie (206) associée à la partie radialement interne (405) du joint (5) est conformée de manière à avoir des conduits, des ouvertures, des passages et/ou des chambres (C) accessibles au fluide du côté de la partie interne (405) du joint (5), qui est pourvu des surfaces de compression (605) ayant au moins une composante directionnelle parallèle à l'écoulement, afin de produire une compression perpendiculairement au fluide intercepté.

4. Soupape selon les revendications 2 ou 3, **caractérisée en ce que** le joint (5), c'est-à-dire sa partie radialement interne (405) et le siège de logement (206) associé à celle-ci ont respectivement des conduits, des ouvertures, des passages et/ou des chambres (C) accessibles au fluide des deux côtés par rapport à un plan médian transversal, en particulier la construction desdites deux parties étant symétrique par rapport à ce plan.

5. Soupape selon l'une ou plusieurs des revendications précédentes, **caractérisée en ce que** les surfaces de compression (605) du joint (5), pressant contre le bouchon (3), se composent des parois latérales de deux rainures annulaires substantiellement médianes coïncidentes (505), formées dans les deux faces du joint annulaire (5), lesdites rainures (505) formant un col annulaire pour connecter la partie interne (405) et la partie externe (305) du joint (5), les sièges pour serrer la partie externe (305) et ceux (206) pour recevoir lâchement la partie interne (405) du joint (5) étant réunies par un rétrécissement de compression annulaire (106), ledit rétrécissement (106) ayant, du côté faisant face aux surfaces de compression de la partie interne (405) du joint (5), des parois latérales qui s'étendent à une certaine distance desdites surfaces de compression (605), en formant ainsi, là où le siège de logement (206) est plus large que l'épaisseur de la partie interne (405) du joint (5), des chambres substantiellement annulaires (C), qui peuvent être accessibles, du côté exposé correspondant du bouchon d'étranglement (3), par le fluide intercepté lorsque le bouchon (3) est dans la position de fermeture.

6. Soupape selon l'une ou plusieurs des revendications précédentes, **caractérisée en ce que** le siège (206) pour recevoir la partie radialement interne (405) du joint (5) et ladite partie radialement interne (405) du joint (5) ont des surfaces de contact d'étanchéité annulaires coopérantes, qui sont orientées transversalement à l'axe du joint (5) et au sens de l'écoulement, conjointement avec des parois ou des surfaces (605), et en particulier, sont exposés à la pression hydrostatique du fluide et ont au moins une composante transversale au sens de l'écoulement du fluide, ce par quoi la pression hydrostatique du fluide agit également dans le sens d'une compression d'étanchéité axiale des surfaces latérales et/ou des parois du joint (5), contre les parois correspondantes et/ou les surfaces correspondantes du siège de logement (206) .

7. Soupape selon la revendication 6, **caractérisée en ce que** le siège (206) pour recevoir et le siège pour serrer les deux parties (305, 405) du joint (5) se composent d'une gorge ayant un rétrécissement médian (106), de sorte que les faces latérales de la partie interne (405) du joint (5) coopèrent avec la paroi latérale opposée correspondante du siège de logement (206) pour fournir des surfaces de contact d'étanchéité transversalement au sens de l'écoulement.

8. Soupape selon l'une ou plusieurs des revendications précédentes, **caractérisée en ce que** le corps de soupape (1) est substantiellement fabriqué d'une seule pièce, et a une cavité annulaire dans la région de la gorge (6), qui forme les sièges pour serrer et recevoir (206) le joint (5), un insert annulaire (10) étant prévu, lequel peut être fixé de manière amovible dans ladite cavité annulaire, et les faces opposées de la cavité annulaire et de l'insert annulaire étant pourvues de rainures dont le profil correspond à la moitié de la section transversale de ladite gorge (6).

9. Soupape selon l'une ou plusieurs des revendications précédentes, **caractérisée en ce que** le joint d'étanchéité annulaire (5) dépasse dans une certaine mesure au-delà de l'ouverture du siège de logement (206), vers le bord d'extrémité du bouchon (3), tandis que le bouchon (3) a un diamètre qui est substantiellement identique ou légèrement plus court que celui du conduit de passage, mais plus long que le diamètre intérieur du joint (5).

10. Soupape selon l'une ou plusieurs des revendications précédentes, **caractérisée en ce que** le bord d'extrémité du bouchon (3), lorsque ce dernier est dans la position de fermeture du passage, et la paroi latérale du siège (206) pour recevoir la partie radialement interne (405) du joint (5), respectivement faisant face au côté exposé à la pression du fluide intercepté, forment deux surfaces substantiellement coudées qui coincent la partie radialement interne (405) du joint (5) lorsque la pression hydrostatique du fluide intercepté agit sur celui-ci.

11. Soupape selon l'une ou plusieurs des revendications précédentes, **caractérisée en ce que** le bouchon (3) est pourvu d'une broche de commande (4) qui est radiale par rapport au joint annulaire (5), ce dernier ayant une bague d'étanchéité intégrale (105) au niveau de la broche de commande (4), dont l'axe est parallèle à l'axe de la broche de commande (4), c'est-à-dire perpendiculaire à l'axe du joint (5), et étant destinée à l'entourer, laquelle bague (105) est maintenue sur une gorge correspondante dans le siège de soupape (2), qui est connectée à la gorge (6) et coopère avec une surface annulaire périphérique (103), correspondant au bouchon (3), qui est placée au niveau du point dans lequel la broche (4) est insérée dans le bouchon (3) et est connectée sans interruption au reste du bord d'extrémité périphérique du bouchon (3).

12. Soupape selon la revendication 11, **caractérisée en ce que** la broche (4) s'étend également du côté diamétralement opposé du bouchon (3), tandis que le joint (5), le bouchon (3) et le siège de soupape (2) ont la même construction que celle revendiquée dans la revendication précédente 11, également dudit côté diamétralement opposé.

13. Soupape selon l'une ou plusieurs des revendications précédentes, **caractérisée en ce que** la broche de commande (4) du bouchon (3) est actionnée par un entraînement à engrenage et vis sans fin (15, 16) dans lequel la vis sans fin (16) et/ou l'engrenage (15) ont des dents ou des surfaces d'engagement mutuel avec un profil globique.

14. Soupape selon la revendication 13, **caractérisée en ce que** l'engrenage (15) et la vis sans fin (16) sont fabriqués en plastique.

15. Soupape selon l'une ou plusieurs des revendications précédentes 13 ou 14, **caractérisée en ce que** le bord périphérique axial des dents de l'engrenage (15) est profilé de manière à correspondre substantiellement au petit diamètre du filetage de la vis sans fin (16), tandis que le filetage s'étendant le long de la vis sans fin (16) a une surface extérieure qui est incurvée vers l'intérieur suivant le rayon de courbure de l'engrenage (15).

16. Soupape selon l'une ou plusieurs des revendications précédentes, **caractérisée en ce que** le corps de soupape a au moins un conduit de décharge (101) communiquant avec le siège pour recevoir la broche de commande du bouchon (4, 404).

17. Soupape selon l'une ou plusieurs des revendications précédentes, **caractérisée en ce qu'**elle comprend un corps de soupape annulaire, en particulier cylindrique, ayant des prolongements opposés coaxiaux pour recevoir la broche (4), lesdits prolongements et le corps de soupape étant connectés par des ailes de renforcement (201) pourvues de fentes radiales (301) pour le passage de boulons de serrage de bride.

18. Soupape selon l'une ou plusieurs des revendications précédentes 1 à 16, **caractérisée en ce qu'**elle comprend un corps de soupape annulaire, en particulier cylindrique, ayant des prolongements opposés coaxiaux pour recevoir la broche (4), une douille d'espacement et de centrage correspondante (20) étant prévue pour chaque boulon pour serrer des brides opposées pour la connexion au corps de soupape (1), dont l'épaisseur de paroi correspond à la distance appropriée entre le boulon et le corps de soupape (1), des douilles (20) étant prévues ayant différentes épaisseurs de paroi, correspondant aux divers types de brides et aux différentes positions radiales des boulons de serrage.

19. Soupape selon la revendication 18, **caractérisée en ce que** les douilles d'espacement et de serrage (20) et au moins les zones de contact du corps de soupape (1) associées à celui-ci, peuvent avoir le premier profil, le dernier profil ou les deux profils complémentaires en vue d'un positionnement mutuel.

20. Soupape d'étranglement selon l'une ou plusieurs des revendications précédentes, **caractérisée en ce que** le bouchon (3) et le joint (5, 405) ont des surfaces de contact d'étanchéité n'ayant aucune composante substantielle transversale au sens de l'écoulement, mais étant seulement orientés substantiellement parallèlement audit sens.

21. Soupape d'étranglement selon la revendication 20, **caractérisée en ce que** lesdites surfaces de contact sont centrées par rapport au plan médian de la soupape, ou de l'axe d'entraînement du bouchon (3) qui est transversal au sens de l'écoulement et contient l'axe de rotation du bouchon (3).

22. Soupape d'étranglement selon l'une ou plusieurs des revendications précédentes, **caractérisée en ce que** les surfaces de contact entre le bouchon (3) et le joint (5, 405) sont annulaires et substantiellement cylindriques, constituées des rebords périphériques en regard du joint (5, 405) et du bouchon (3), la première, la deuxième ou les deux surfaces pouvant éventuellement être légèrement couronnées ou arrondies.
